# EUROPEAN PATENT SPECIFICATION

(11) **EP 3 517 804 B1**
(45) Date of publication and mention of the grant of the patent: **05.03.2025**
(21) Application number: 19152633.4
(22) Date of filing: 18.01.2019
(51) Int. Cl.: F16F 15/121, F16F 15/12

(54) **DAMPER ASSEMBLY FOR A CLUTCH**
DÄMPFERANORDNUNG FÜR EINE KUPPLUNG
ENSEMBLE AMORTISSEUR POUR EMBRAYAGE

(30) Priority: 30.01.2018 GB 201801522
(43) Date of publication of application: 31.07.2019
(73) Proprietor: Ford Global Technologies, LLC, Dearborn, MI 48126 (US)
(72) Inventor: KUZENKO, Antons, Basildon, Essex SS15 6LF (GB)
(74) Representative: Haseltine Lake Kempner LLP

(56) References cited:
- EP-A1- 0 165 874
- EP-A1- 1 662 173
- WO-A1-00/11364
- WO-A1-00/45063
- WO-A1-99/58877
- DE-A1- 4 327 017
- US-A1- 2009 321 210
- US-A1- 2015 226 273

## Description

This disclosure relates to a damper assembly for a clutch, and in particular, but not exclusively, relates to reducing the noise, vibration and harshness associated with the operation of a clutch.

### Introduction

A vehicle is typically fitted with a clutch that is used to selectively engage and disengage the output shaft of a motor of the vehicle from a drivetrain of the vehicle. In some circumstances, the user of the vehicle may experience undesirable noises and acoustic phenomena whilst operating the vehicle. For example, the user may hear one or more noises, such as a heavy sound of an impact (a clonk) whilst operating the clutch and/or the transmission.

Such unwanted acoustic phenomena have been an issue for many years, but are generally caused by the backlash, or play, in the drivetrain of the vehicle. Such back lash is normally the result of inherent assembly tolerances, and can be made worse as components wear. In particular, it has been observed that the backlash between components of a clutch can contribute significantly to clonk.

More recently, with the introduction of increasingly strict efficiency and emissions requirements, it has become necessary to reduce the amount of friction between drivetrain components, which can lead to an increase in undesirable noises and acoustic phenomenon, such as rattle. One way in which rattle can be reduced is to increase the amount of backlash between components of a clutch. However, this can lead to higher levels of impact loading within the clutch, which can increase the levels of clonk perceived by the user.

EP0165874 (corresponding to US 4,698,045) discloses a torsion damping device in which a centrifugal force-sensitive interposing means ensures, at low torque values, beyond a determined critical rotation speed, the intervention of an elastic member normally inactive at such low torque values. According to the invention, this interposition member comprises at least one flange, which, by a toothing, is capable of engaging with the hub, and which, by a support lug, is then able to act on the elastic member concerned.

EP1662173 discloses a torsional vibration damper for use in vehicles comprising two masses which rotate with respect to each other against the resistance of a helical spring. This is mounted in a groove in one of the masses and is supported by slide blocks mounted on the inner wall of the groove and is adjusted according to the centrifugal force acting on the spring.

### Statements of Invention

According to an aspect of the invention there is provided a torque transfer plate for a clutch, as set out in claim 1 below. The surface coating is configured to at least partially silence the torque transfer plate under impact loading, which can be of particular benefit where there is play, i.e. backlash, between the torque transfer plate and one or more other components that the torque transfer plate is operationally coupled to, such as an output shaft, or hub, of the clutch. The torque transfer plate is a component of a damper assembly of the clutch. The output shaft of the clutch is configured to attach directly to an input shaft of a transmission.

The torque transfer plate may be coated in a combination of surface coatings. A first surface coating may be applied to a first region of the torque transfer plate. A second surface coating may be applied to a second region of the torque transfer plate.

The surface coating may be provided on at least a portion of an axial end face of the torque transfer plate. In an assembled configuration, the axial end face of the torque transfer plate may be in operational clearance with one or more other components, e.g. adjacent components of the clutch. The surface coating may be provided on at least a portion of a radial surface of the torque transfer plate. In an assembled configuration, the radial surface of the torque transfer plate may be configured to engage at least one other component of the clutch, so as to transfer torque to the at least one other component.

The torque transfer plate may comprise a central opening configured to receive the output shaft of the clutch. The torque transfer plate may comprise one or more projections, e.g. first projections, that extend radially inwards from the periphery of the opening. The first projections may be configured to rotationally couple the torque transfer plate to the output shaft in an assembled configuration, for example by virtue of engagement with one or more other projections, e.g. second projections, that extend radially outwards from the periphery of the output shaft. The surface coating may not be provided on at least one surface of each of the projections of the torque transfer plate. For example, when the surface coating is applied to the torque transfer plate, the process may involve masking at least a portion of at least one of the projections of the torque transfer plate. In this manner, the contact mechanics between the torque transfer plate and the output shaft may not be affected by the surface coating applied to the torque transfer plate.

The surface coating may be any appropriate coating that results in the acoustic properties of the torque transfer plate being altered such that the torque transfer plate is at least partially silenced when impacted by another object.

The surface coating may be formed from an acoustic damping material, for example a polymeric material. The surface coasting may be polytetrafluoroethylene. The surface coasting may have thickness of less than approximately 200 microns.

A clutch may be provided comprising one or more of the above mentioned torque transfer plates. A vehicle may be provided comprising one or more of the above mentioned clutches.

According to another aspect of the present invention there is provided a method of acoustically tuning a torque transfer plate for a clutch having the damper assembly of claim 1, the method comprising: forming the torque transfer plate of the damper assembly such that the torque transfer plate is configured to rotationally couple to an output shaft of the clutch so as to transfer torque from a driven plate of the clutch to the output shaft; and applying a surface coating to the torque transfer plate. The surface coating may be formed from an acoustic damping material. The application of the surface coating to the torque transfer plate may significantly alter the acoustic response of the torque transfer plate under impact loading.

The method may comprise determining an acoustic property, e.g. a resonant property (natural frequency), of the torque transfer plate before applying the surface coating. The method may comprise determining the acoustic property of the torque transfer plate after applying the surface coating. The step of applying the surface coating comprises acoustically tuning the torque transfer plate to at least partially silence the torque transfer plate under impact loading. The step of acoustically tuning the torque transfer plate may comprise applying a first surface coating, determining the acoustic response of the torque transfer plate, and at least one of applying a second surface coating and removing a portion of the first surface coating. The first and second surface coatings may be different types of surface coating.

According to another aspect of the present disclosure there is provided a clutch component comprising a surface coating, the surface coating being specifically configured to reduce the level of noise produced during the operation of the clutch.

According to another aspect of the present disclosure there is provided a method of acoustically tuning a clutch component, e.g. a torque transfer plate for a clutch, by virtue of at least one of: applying a surface coating to the clutch component; removing material from a body portion of the clutch component; and adding material to the body portion of the clutch component.

The disclosure also provides software, such as a computer program or a computer program product for carrying out any of the methods described herein, and a computer readable medium having stored thereon a program for carrying out any of the methods described herein. A computer program embodying the disclosure may be stored on a computer-readable medium, or it could, for example, be in the form of a signal such as a downloadable data signal provided from an Internet website, or it could be in any other form.

To avoid unnecessary duplication of effort and repetition of text in the specification, certain features are described in relation to only one or several aspects or arrangements of the disclosure. However, it is to be understood that, where it is technically possible, features described in relation to any aspect or arrangement of the disclosure may also be used with any other aspect or arrangement of the disclosure.

### Brief Description of the Drawings

For a better understanding of the present disclosure, and to show more clearly how it may be carried into effect, reference will now be made, by way of example, to the accompanying drawings, in which:
Figure 1 shows an exploded view of a clutch; and
Figure 2 shows a partial front view of the clutch.

### Detailed Description

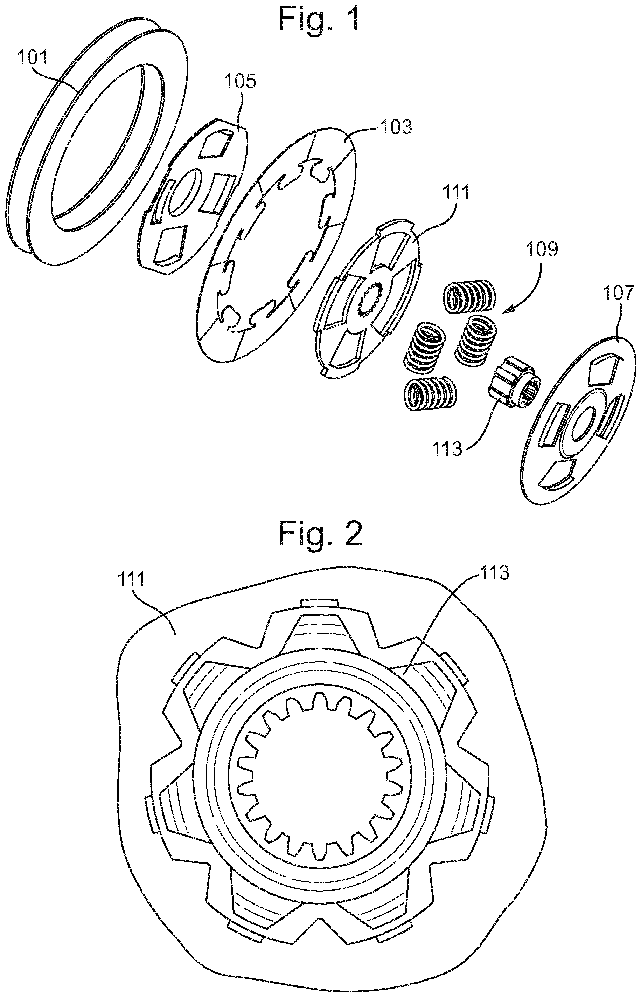

Figure 1 shows a simplified exploded view of a clutch assembly for a vehicle, the clutch assembly allowing for the selective engagement and disengagement of an output shaft of a motor of the vehicle from a transmission of the vehicle, and/or another component of the drivetrain of the vehicle. The clutch may be any appropriate type of clutch configured for use on a vehicle, such a car, a van, a truck, a motor bike, a marine vessel or an aircraft. In particular, the clutch may be a single-mass flywheel clutch for use on a vehicle having a relatively small internal combustion engine. However, in another arrangement, the clutch may be a duel mass flywheel clutch, such as one used on commercial vehicles and/or vehicles with diesel engines.

In the arrangement shown in figure 1, the clutch comprises a driven plate assembly comprising a driven plate 101 and friction member 103, the driven plate assembly being configured to transfer torque from the engine to the clutch, when the driven plate assembly is brought into engagement with the flywheel of the engine.

The clutch further comprises a damper assembly, which has first and second disc members 105, 107 which are rigidly secured to the driven plate assembly in an assembled configuration. The first and second disc members 105, 107 cooperate to form a housing for a set of damper springs 109, a torque transfer plate 111 and an output shaft 113, or hub member, of the clutch. Each of the first and second disc members 105, 107 and the torque transfer plate 111 comprise a plurality of recesses, or cut-outs, that are each configured to receive and hold a respective damper spring of the damper spring set 109. When the damper assembly is assembled to the driven plate assembly, the torque is transmitted directly from the driven plate assembly to the first and second disc members 105, 107, and through the damper spring set 109 to the torque transfer plate 111 and the output shaft 113. In this manner, fluctuations in the torque output from the engine are damped by the damper assembly, which reduces the torque fluctuation seen by the output shaft 113 of the clutch.

Figure 2 shows a detailed view of the rotational coupling between the torque transfer plate 111 and the output shaft 113 of the clutch. The torque transfer plate 111 comprises a central opening configured to receive axially the output shaft 113. In the arrangement shown in figure 1, the first and second disc members 105 are configured to support the output shaft 113 in the opening of the torque transfer plate 111, such that there is a radial clearance between the outer diameter of the output shaft 113 and the inner diameter of the opening of the torque transfer plate 111. However, in one or more other arrangements, the output shaft 113 may be supported in any appropriate manner by one or more appropriate components of the clutch.

In the arrangement shown in figures 1 and 2, the torque transfer plate 111 is rotationally coupled to the output shaft 113 by virtue of a plurality teeth that mesh with one another. For example, the torque transfer plate 111 may comprise a plurality of first projections that extend radially inwards from the opening of the torque transfer plate 111, and a plurality of second projections that extend radially outwards from the outer diameter of the output shaft 113. In some clutch arrangements (not shown), the teeth of the torque transfer plate 111 and the output shaft 113 are configured such that there is little backlash (play) between the teeth. However, the clutch shown in figure 2 comprises a substantial amount of backlash between the teeth of the torque transfer plate 111 and the output shaft 113. The provision of such an amount of backlash enables the rotational interface between the torque transfer plate 111 and the output shaft 113 to function as a pre-damper stage of the clutch, which acts to further reduce the transfer of torque fluctuations from the engine to the drivetrain.

However, with the introduction of increasingly strict efficiency and emissions requirements, it has become necessary to reduce the amount of friction between drivetrain components, which can lead to an increase in undesirable noises and acoustic phenomena, such as rattle. One way in which, rattle can be reduced is to increase the amount of damping in the pre-damper stage of a clutch, i.e. by increasing the amount of backlash between the teeth of the torque transfer plate 111 and the output shaft 113. However, this can lead to higher levels of impact loading within the pre-damper stage of a clutch, e.g. as the teeth engage one another, which can increase the levels of clonk perceived by the user.

The present disclosure provides a clutch having improved noise vibration and harshness characteristics. In particular, the present disclosure provides a torque transfer plate 111 for a clutch, the torque transfer plate 111 having improved acoustic properties, which result in a reduction in the audible noise, e.g. clonk, that can be heard whilst operating the clutch.

As can be seen in figure1, the shape of the torque transfer plate 111 is a thin disc comprising cut-outs for the damper spring set 109. As a result of the inherent shape of the torque transfer plate 111, the torque transfer plate 111 has a natural frequency close to the operational frequencies encountered during its operation, which serves to amplify any impact sound inputs, resulting in undesirable audible sounds, such as clonk.

In order to alter the acoustic properties, e.g. the natural frequency, of the torque transfer plate 111, the torque transfer plate 111 comprises a surface coating. For example, the torque transfer plate 111 may comprise a functional surface coating configured to alter the acoustic properties of the torque transfer plate 111. In this manner, the acoustic response from the torque transfer plate 111 under impact sound inputs may be substantially different when compared to an un-coated torque transfer plate 111. Thus, the application of a surface coating to a torque transfer plate 111 leads to a reduced level of undesirable audible sounds.

The surface coating may be formed from any material having significant acoustic damping properties. In one arrangement, the surface coating may be a polytetrafluoroethylene coating. The surface coating may be applied using any appropriate coating process, such as vapour deposition, chemical and electrochemical techniques, spraying, roll-to-roll coating processes, and/or physical coating processes. Importantly, the surface coating may be applied so as to not affect the design function of the torque transfer plate 111, i.e. its ability to transfer torque between the driven plate assembly and the output shaft of the clutch, e.g. by altering the shape and/or size of the torque transfer plate 111.

In one arrangement, the surface coating may be applied over the entire outer surface of the torque transfer plate 111, e.g. over the axial end faces and the radial outer and inner surfaces of the torque transfer plate 111. However, in some cases, it may be desirable to mask certain areas of the torque transfer plate 111 to prevent the surface coating being applied to those areas. For example, the material of the torque transfer plate 111, and the output shaft 113, may be selected to optimise the interaction, e.g. contact mechanics, between the teeth of the torque transfer plate 111 and the teeth of the output shaft 113. In such circumstances, it may be desirable to not apply a surface coating to the teeth of the torque transfer plate 111, so as to not alter the interaction between the torque transfer plate 111 and the output shaft 113.

The present disclosure also provides a method of acoustically tuning a clutch component, such as the above mentioned torque transfer plate 111. For example, the method may comprise a step of determining the acoustic properties of the torque transfer plate 111, for example determining one or more resonant frequencies of the torque transfer plate 111. The method comprises a step of applying a surface coating to the torque transfer plate 111 in order to adjust the determined acoustic properties.

It will be appreciated by those skilled in the art that although the disclosure has been described by way of example with reference to one or more arrangements, it is not limited to the disclosed arrangements and that alternative arrangements could be constructed provided that they fall within the scope of the appended claims.

## Claims

1. A damper assembly for a clutch, the damper assembly being configured to transfer torque from a driven plate (101) of the clutch to an output shaft (113) of the clutch, the damper assembly comprising a torque transfer plate (111) configured to rotationally couple to an output shaft (113) of the clutch by virtue of a plurality of teeth on the torque transfer plate (111) and the output shaft (113) that mesh with one another so as to transfer torque from the driven plate (101) to the output shaft (113), **characterised in that** the torque transfer plate (111) comprising at
least one functional surface coating configured to alter a natural frequency of the torque transfer plate (111), so as to at least partially silence the torque transfer plate (111) under impact loading.

2. A damper assembly according to claim 1, wherein the surface coating is provided on an axial end face of the torque transfer plate (111).

3. A damper assembly according to claim 1 or 2, wherein the surface coating is provided on a radial surface of the torque transfer plate (111).

4. A damper assembly according to any of the preceding claims, wherein the torque transfer plate (111) comprises a central opening configured to receive the output shaft (113) of the clutch, wherein the teeth comprise a plurality of projections that extend radially inwards from the periphery of the opening, the projections being configured to rotationally couple the torque transfer plate (111) to the output shaft (113) in an assembled configuration.

5. A damper assembly according to claim 4, wherein the rotational coupling between the torque transfer plate (111) to the output shaft (113) comprises a pre-damper stage of the clutch.

6. A damper assembly according to claim 4 or 5, wherein the coating is not provided on at least one surface of each of the projections.

7. A damper assembly according to any of the preceding claims, wherein the surface coating is polytetrafluoroethylene.

8. A clutch comprising the damper assembly of claims 1 to 7.

9. A method of acoustically tuning a damper assembly for a clutch, having the damper assembly of any preceding claim, the method comprising:
forming the torque transfer plate (111) of the damper assembly such that the torque transfer plate (111) is configured to rotationally couple to an output shaft (113) of the clutch by virtue of a plurality of teeth on the torque transfer plate (111) and the output shaft (113) that mesh with one another so as to transfer torque from a driven plate (101) of the clutch to the output shaft (113); and
applying the surface coating to the torque transfer plate (111).

10. A method according to claim 9, the method comprising:
determining an acoustic property of the torque transfer plate (111) before applying the surface coating; and
determining the acoustic property of the torque transfer plate (111) after applying the surface coating.

11. A method according to claim 9 or 10, wherein the step of applying the surface coating comprises acoustically tuning the torque transfer plate (111) to at least partially silence the torque transfer plate (111) under impact loading.

12. A method according to claim 11, wherein the step of acoustically tuning the torque transfer plate (111) comprises:
applying a first surface coating;
determining the acoustic response of the torque transfer plate (111); and
at least one of applying a second surface coating and removing a portion of the first surface coating.

## Patentansprüche

1. Dämpferanordnung für eine Kupplung, wobei die Dämpferanordnung dazu konfiguriert ist, ein Drehmoment von einer angetriebenen Platte (101) der Kupplung auf eine Ausgangswelle (113) der Kupplung zu übertragen, wobei die Dämpferanordnung eine Drehmomentübertragungsplatte (111) umfasst, die dazu konfiguriert ist, mit einer Ausgangswelle (113) der Kupplung durch eine Vielzahl von Zähnen auf der Drehmomentübertragungsplatte (111) und der Ausgangswelle (113), die miteinander verzahnt werden, um ein Drehmoment von der angetriebenen Platte (101) auf die Ausgangswelle (113) zu übertragen, drehbar zu koppeln, **dadurch gekennzeichnet, dass** die Drehmomentübertragungsplatte (111) mindestens eine funktionelle Flächenbeschichtung umfasst, die dazu konfiguriert ist, eine Eigenfrequenz der Drehmomentübertragungsplatte (111) zu verändern, um die Drehmomentübertragungsplatte (111) unter Stoßbelastung mindestens teilweise zu dämpfen.

2. Dämpferanordnung nach Anspruch 1, wobei die Flächenbeschichtung auf einer axialen Stirnfläche der Drehmomentübertragungsplatte (111) bereitgestellt ist.

3. Dämpferanordnung nach Anspruch 1 oder 2, wobei die Flächenbeschichtung auf einer radialen Fläche der Drehmomentübertragungsplatte (111) bereitgestellt ist.

4. Dämpferanordnung nach einem der vorhergehenden Ansprüche, wobei die Drehmomentübertragungsplatte (111) eine Mittelöffnung umfasst, die dazu konfiguriert ist, die Ausgangswelle (113) der Kupplung aufzunehmen, wobei die Zähne eine Vielzahl von Vorsprüngen umfassen, die sich von dem Umfang der Öffnung radial nach innen erstreckt, wobei die Vorsprünge dazu konfiguriert sind, die Drehmomentübertragungsplatte (111) mit der Ausgangswelle (113) in einer montierten Konfiguration drehbar zu koppeln.

5. Dämpferanordnung nach Anspruch 4, wobei das Drehkopplen zwischen der Drehmomentübertragungsplatte (111) und der Ausgangswelle (113) eine Vordämpferstufe der Kupplung umfasst.

6. Dämpferanordnung nach Anspruch 4 oder 5, wobei die Beschichtung nicht auf mindestens einer Fläche jedes der Vorsprünge bereitgestellt ist.

7. Dämpferanordnung nach einem der vorhergehenden Ansprüche, wobei die Flächenbeschichtung aus Polytetrafluorethylen besteht.

8. Kupplung, umfassend die Dämpferanordnung nach den Ansprüchen 1 bis 7.

9. Verfahren zum akustischen Abstimmen einer Dämpferanordnung für eine Kupplung, die die Dämpferanordnung nach einem vorhergehenden Anspruch aufweist, wobei das Verfahren Folgendes umfasst:
Bilden der Drehmomentübertragungsplatte (111) der Dämpferanordnung, sodass die Drehmomentübertragungsplatte (111) dazu konfiguriert ist, mit einer Ausgangswelle (113) der Kupplung durch eine Vielzahl von Zähnen auf der Drehmomentübertragungsplatte (111) und der Ausgangswelle (113), die miteinander verzahnt werden, um ein Drehmoment von einer angetriebenen Platte (101) der Kupplung auf die Ausgangswelle (113) zu übertragen, drehbar zu koppeln; und
Auftragen der Flächenbeschichtung auf die Drehmomentübertragungsplatte (111).

10. Verfahren nach Anspruch 9, wobei das Verfahren Folgendes umfasst:
Bestimmen einer akustischen Eigenschaft der Drehmomentübertragungsplatte (111) vor dem Auftragen der Flächenbeschichtung; und
Bestimmen der akustischen Eigenschaft der Drehmomentübertragungsplatte (111) nach dem Auftragen der Flächenbeschichtung.

11. Verfahren nach Anspruch 9 oder 10, wobei der Schritt des Auftragens der Flächenbeschichtung das akustische Abstimmen der Drehmomentübertragungsplatte (111) umfasst, um die Drehmomentübertragungsplatte (111) unter Stoßbelastung mindestens teilweise zu dämpfen.

12. Verfahren nach Anspruch 11, wobei der Schritt des akustischen Abstimmens der Drehmomentübertragungsplatte (111) Folgendes umfasst:
Auftragen einer ersten Flächenbeschichtung;
Bestimmen der akustischen Reaktion der Drehmomentübertragungsplatte (111); und
mindestens eines von Auftragen einer zweiten Flächenbeschichtung und Entfernen eines Abschnitts der ersten Flächenbeschichtung.

## Revendications

1. Ensemble amortisseur pour embrayage, l'ensemble amortisseur étant configuré pour transférer le couple d'un disque entraîné (101) de l'embrayage à un arbre de sortie (113) de l'embrayage, l'ensemble amortisseur comprenant une plaque de transfert de couple (111) configurée pour s'accoupler en rotation à un arbre de sortie (113) de l'embrayage grâce à une pluralité de dents sur la plaque de transfert de couple (111) et l'arbre de sortie (113) qui s'engrènent les unes avec les autres de manière à transférer un couple du disque entraîné (101) à l'arbre de sortie (113), **caractérisé en ce que** la plaque de transfert de couple (111) comprend au moins un revêtement de surface fonctionnel configuré pour modifier une fréquence naturelle de la plaque de transfert de couple (111), de manière à rendre au moins partiellement silencieuse la plaque de transfert de couple (111) sous une charge d'impact.

2. Ensemble amortisseur selon la revendication 1, dans lequel le revêtement de surface est prévu sur une face d'extrémité axiale de la plaque de transfert de couple (111).

3. Ensemble amortisseur selon la revendication 1 ou 2, dans lequel le revêtement de surface est prévu sur une surface radiale de la plaque de transfert de couple (111).

4. Ensemble amortisseur selon l'une quelconque des revendications précédentes, dans lequel la plaque de transfert de couple (111) comprend une ouverture centrale configurée pour recevoir l'arbre de sortie (113) de l'embrayage, dans lequel les dents comprennent une pluralité de saillies qui se prolongent radialement vers l'intérieur à partir de la périphérie de l'ouverture, les saillies étant configurées pour accoupler en rotation la plaque de transfert de couple (111) à l'arbre de sortie (113) dans une configuration assemblée.

5. Ensemble amortisseur selon la revendication 4, dans lequel l'accouplement rotatif entre la plaque de transfert de couple (111) et l'arbre de sortie (113) comprend un étage de pré-amortisseur de l'embrayage.

6. Ensemble amortisseur selon la revendication 4 ou 5, dans lequel le revêtement n'est pas prévu sur au moins une surface de chacune des saillies.

7. Ensemble amortisseur selon l'une quelconque des revendications précédentes, dans lequel le revêtement de surface est du polytétrafluoroéthylène.

8. Embrayage comprenant l'ensemble amortisseur selon les revendications 1 à 7.

9. Procédé de réglage acoustique d'un ensemble amortisseur pour embrayage, comportant l'ensemble amortisseur selon une quelconque revendication précédente, le procédé comprenant les étapes consistant à :
former la plaque de transfert de couple (111) de l'ensemble amortisseur de telle sorte que la plaque de transfert de couple (111) soit configurée pour s'accoupler en rotation à un arbre de sortie (113) de l'embrayage grâce à une pluralité de dents sur la plaque de transfert de couple (111) et l'arbre de sortie (113) qui s'engrènent les unes avec les autres de manière à transférer le couple d'un disque entraîné (101) de l'embrayage à l'arbre de sortie (113) ; et
appliquer le revêtement de surface sur la plaque de transfert de couple (111).

10. Procédé selon la revendication 9, le procédé comprenant les étapes consistant à :
déterminer une propriété acoustique de la plaque de transfert de couple (111) avant l'application du revêtement de surface ; et
déterminer la propriété acoustique de la plaque de transfert de couple (111) après l'application du revêtement de surface.

11. Procédé selon la revendication 9 ou 10, dans lequel l'étape d'application du revêtement de surface comprend le réglage acoustique de la plaque de transfert de couple (111) pour rendre au moins partiellement silencieuse la plaque de transfert de couple (111) sous une charge d'impact.

12. Procédé selon la revendication 11, dans lequel l'étape de réglage acoustique de la plaque de transfert de couple (111) comprend :
l'application d'un premier revêtement de surface ;
la détermination de la réponse acoustique de la plaque de transfert de couple (111) ; et
au moins l'une des étapes parmi l'application d'un deuxième revêtement de surface et le retrait d'une partie du premier revêtement de surface.
